# EUROPEAN PATENT APPLICATION

(11) **EP 4 552 505 A2**
(43) Date of publication of application: **14.05.2025**
(21) Application number: 24197854.3
(22) Date of filing: 02.09.2024
(51) Int. Cl.: A22C 21/00, B65G 17/20

(54) **POULTRY HANGING SYSTEM, POULTRY CONVEYING LINE, AND METHOD OF HANGING THE POULTRY**

(30) Priority: 21.09.2023 NL 2035845
(71) Applicant: Meyn Food Processing Technology B.V., 1511 MA Oostzaan (NL)
(72) Inventor: VAN STRALEN, Rick Sebastiaan, Oostzaan (NL); VAN STEIJN, Aloysius Christianus Maria, Oostzaan (NL); AL, Gertjan, Oostzaan (NL); FRANKE, René, Oostzaan (NL)
(74) Representative: van Breda, Jacobus

(57) **Abstract**

Poultry hanging system (1) for feeding a primary line (2) in which the poultry is or will be suspended from first carriers that are movable at a first conveying speed, comprising a poultry feedline (3) for transferring non-suspended poultry to at least one secondary line (4) and wherein transfer units (5) are provided for transferring the poultry from the at least one secondary line (4) to the primary line (2), wherein the at least one secondary line (4) is equipped with second carriers for suspending the poultry, and the poultry feedline (3) transfers the non-suspended poultry to a suspension location where the poultry is suspended in the second carriers of the at least one secondary line (4), and wherein at least in the suspension location said second carriers of the at least one secondary line (4) are movable at a second conveying speed that is lower than the first conveying speed of the primary line (2).

## Description

The invention relates to a poultry hanging system for feeding a primary line in which the poultry is or will be suspended from first carriers that are movable at a first conveying speed, comprising a poultry feedline for transferring non-suspended poultry to at least one secondary line and wherein at least one transfer unit is provided for transferring the poultry from the at least one secondary line to the primary line, wherein the at least one secondary line is equipped with second carriers for suspending the poultry.

EP 1 276 382 discloses such a poultry hanging system.

US2013/0052924 discloses a poultry hanging system for feeding a primary line in which the poultry is or will be suspended from first carriers that are movable at a first conveying speed, comprising a poultry feedline for transferring non-suspended poultry to at least one secondary line and wherein transfer units are provided for transferring the poultry from the at least one secondary line to the primary line. The transfer units may be of any available design that is known from the prior art.

More precisely, US2013/0052924 discloses a method and apparatus for suspending living or stunned poultry to be slaughtered in conveyor brackets of an overhead conveyor. A belt conveyor delivers the poultry to a distribution surface, where the poultry are successively guided or pushed outwardly against an edge of the distribution surface to individual positions for receiving the poultry with the legs projecting from the edge of the positions. The legs are fixed in fixing means at the positions. The individual positions are then successively moved upwardly relative to the distribution surface to suspend the poultry for a subsequent downward movement of the positions by brackets of the overhead conveyor running above and spaced apart from the distribution surface. The positions are subsequently moved downwardly again to the level of the distribution surface.

Although the known poultry hanging system is said to provide a more secure and gentle suspending of poultry, it is observed that this secure suspending of the poultry requires a secure positioning of the legs of the poultry over the edge of the distribution surface in order to enable a lifting device as disclosed in figures 1-7 of US2013/0052924 to pick up and lift off the poultry from the distribution surface. This means that the accuracy of the hanging system depends on both the accuracy of the operators work in positioning the poultry legs accurately over the edge of the distribution surface, but also on the accuracy in the dimensioning and operation of the lifting device which is designed with an assumption on where and how far the poultry legs extend over the edge of the distribution surface. All in all this is rather complicated and prone to misalignment at several instances.

The above problems are intensified by the fact that the pace of working of the operators is dictated by the conveying speed of the first carriers in the primary line. Particularly at the nowadays conventional conveying speeds which may amount to 15000 chickens per hour at a pitch of 15 cm/6 inch, the work of the operators is stressful and hanging efficiency is at stake at such high line speeds.

In other words, there is room for a more simple solution and improvement over the prior art. The invention intends to provide this simplification and improvement, wherein particularly the working conditions for the operators are improved.

According to the invention a poultry hanging system, a poultry conveying line that may be used in such a poultry hanging system, and a method for hanging the poultry are proposed having the features according to one or more of the appended claims.

In a first aspect of the invention the poultry hanging system of the preamble is modified in that in use the poultry feedline transfers the non-suspended poultry to at least two separate suspension locations where the poultry is suspendable in the second carriers of the at least one secondary line, and that there are at least two transfer units for transferring the poultry from the at least one secondary line to the primary line so as to enable and arrange that at least in the suspension locations said second carriers of the at least one secondary line are movable at a second conveying speed that is lower than the first conveying speed of the primary line.

With the invention the benefit is achieved that the operation can be carried out in a manner that is attuned to the second conveying speed of the at least one secondary line, which may be half or even lower than the first conveying speed of the primary line, whilst avoiding that more operators are required or more stress is experienced in the execution of the task of hanging the poultry. A further benefit of the invention is that the required accuracy in the operation of the system concentrates to the suspension locations where the poultry will be suspended in the carriers of the at least one secondary line. Overall the entire poultry hanging operation can then be carried out more securely and reliably, and with simpler means.

As indicated above the suspension locations may be equipped with one of an operator position, but it is also envisaged that the hanging will be done with automatic hanging equipment, which can be any type of automatic hanging equipment known in the art. Such suitable automatic hanging equipment is for instance disclosed in European patent application EP 23162287.9 and in European patent application EP 23164542.5, both in the name of the applicant.

It may be beneficial that the system is provided with two or more secondary lines. When more secondary lines are provided their individual conveying speeds can be further lowered without compromising the conveying speed of the primary line.

It is envisaged that a first distance or pitch between the carriers in the primary line may be variable, but preferably the distance between carriers in the primary line is constant.

Advantageously the second carriers in the secondary line are at a second distance in the suspension location and at a third distance near the transfer units, wherein the third distance is larger than the second distance. This enables that operational conditions at the suspension location and the operational conditions near the transfer units can be optimized for the functions of suspending the poultry and transferring the poultry, respectively.

To support a reliable operation it is further preferable that the transfer units are synchronized with the primary line to arrange that poultry suspended in the second carriers of the at least one secondary line are all individually transferred to an available empty first carrier in the primary line. This can be done by (known from prior art)
1) a mechanical coupling between the primary line and the secondary line(s), or
2) an electronic controlled coupling (electronic gear) between the primary line and the secondary line(s), making use of sensors and encoders (pulse generators), electric drives and a control system.

The features as discussed in this paragraph can be applied separate from the other features as discussed herein and independent therefrom. The construction of the or each secondary line may be according to different embodiments as known from the prior art, provided that any such secondary line is equipped with carriers for suspending the poultry. It is however preferable that the or each secondary line comprises an endless pathway for the second carriers, wherein rotation wheels drive the second carriers along at least a part of the pathway, and wherein one or more predominantly straight sections of the pathway are provided between the rotation wheels, and that the or each secondary line is provided with a spindle drive for driving the second carriers in the straight sections between the rotation wheels. The spindle drive secures an accurate way of driving the carriers at a specific speed which is dedicated to the hanging operation on the poultry in said straight sections, which embody the suspension locations where the poultry is suspended in the at least one secondary line.

Suitably each of the carriers is provided with a protrusion or protrusions that extend to and cooperate with at least one of the spindle drive and the rotation wheels.

It is further preferable that the rotation wheels drive the second carriers in the at least one secondary line independent from the spindle drive for the second carriers in the at least one secondary line. This is particularly beneficial for optimizing and differentiate between the speeds applied in the at least one secondary line at suspending the poultry, and at rehanging the poultry from the at least one secondary line to the primary line. In connection therewith it is to be noted that preferably the transfer units are located at the at least one secondary line opposite to the rotation wheels.

The accompanying drawing, which is incorporated into and forms a part of the specification, illustrates one or more embodiments of the present invention and, together with the description, serves to explain the principles of the invention. The drawing is only for the purpose of illustrating one or more embodiments of the invention and is not to be construed as limiting the invention.

In the drawing:
- figure 1 schematically shows a first embodiment of a poultry hanging system of the invention;
- figure 2 schematically shows a second embodiment of a poultry hanging system of the invention; and
- figure 3 shows a poultry conveying line according to the invention.

Whenever in the figures the same reference numerals are applied, these numerals refer to the same parts.

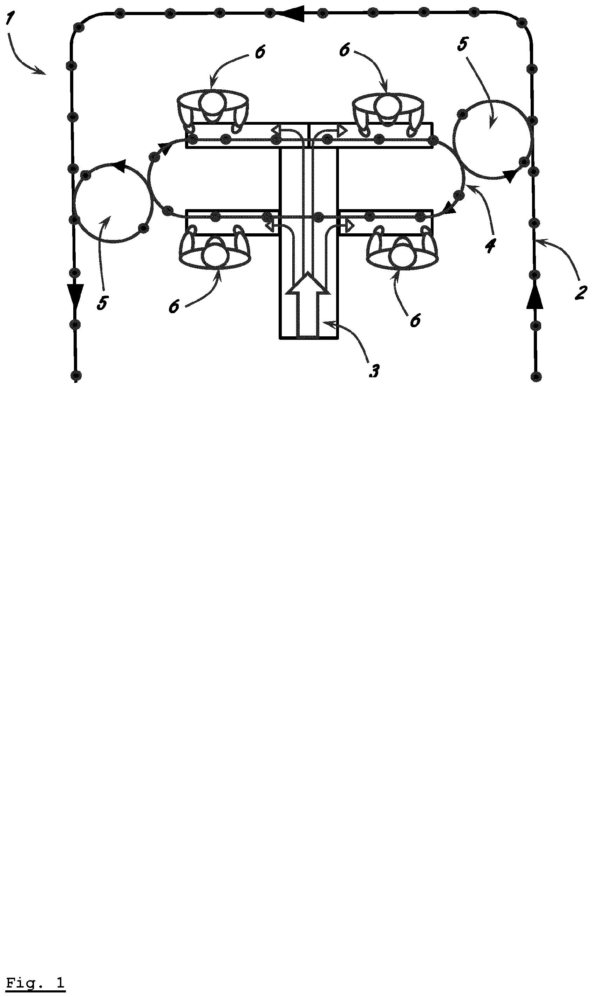

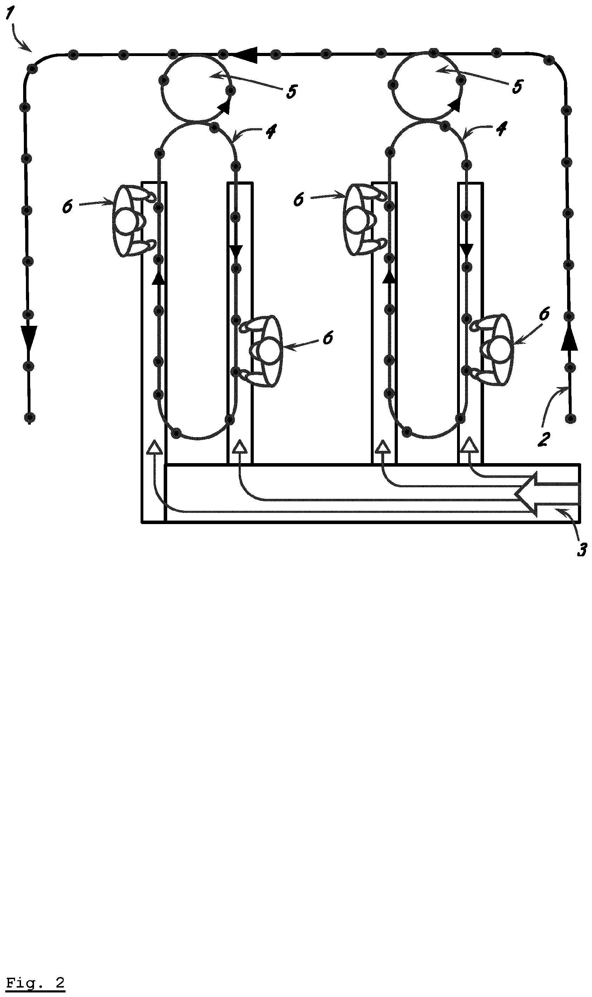

Figure 1 and figure 2 depict two different embodiments of a poultry hanging system 1 according to the invention. Such a poultry hanging system 1 is used for feeding a primary line 2 that runs at high speed and in which the poultry is or will be suspended from first carriers, e.g suspended from the feet or from the head. The primary line 2 transfers the suspended poultry subsequently to certain process equipment where the poultry will be subjected to further processing. Because of the high-speed it is a challenge to occupy each and every separate first carrier of the primary line 2 with suspended poultry and avoid that carriers remain empty.

The poultry that is to be suspended in the primary line 2 is supplied with a conveyor line or poultry feedline 3, in which poultry feedline 3 the poultry may be without any particular orientation, and transported in crates or freely. In order to meet the requirement that every separate first carrier in the primary line 2 may receive suspended poultry, use is made of at least one secondary line 4 with second carriers that are movable at a second conveying speed, and wherein the second conveying speed is lower than the first conveying speed of the first carriers in the primary line 2.

Figure 1 depicts the situation that there is only a single secondary line 4, whereas figure 2 depicts the situation that there are two secondary lines 4. The number of secondary lines 4 can be further increased if the need arises.

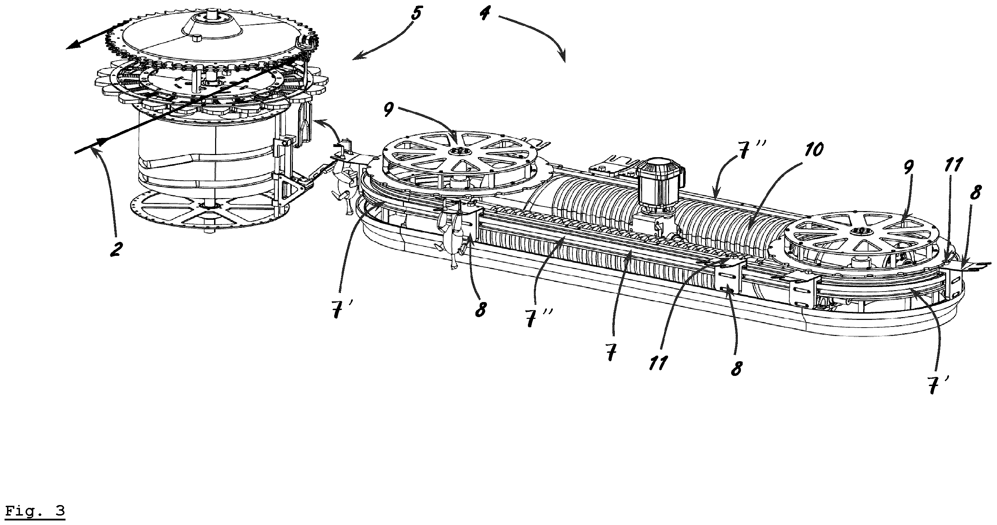

In both figure 1 and figure 2 it is shown that transfer units 5 are provided for transferring the poultry from the or each secondary line 4 to the primary line 2. Specific to the invention is that the or each secondary line 4 is equipped with second carriers for suspending the poultry (e.g. from the feet or from the head), which second carriers, like the first carriers of the primary line 2, are known per se. The second carriers 8 of the at least one secondary line 4 are schematically shown in figure 3.

As is shown in both figure 1 and figure 2 the poultry feedline 3 transfers the non-suspended poultry to at least two suspension locations, where operators 6 are positioned that take the poultry from the conveyor line 3 and suspend the poultry in the second carriers of the or each secondary line 4.

It is also shown that there are at least two transfer units 5 for transferring the poultry from the at least one secondary line 4 to the primary line 2 so as to enable and arrange that at least in the suspension locations said second carriers of the at least one secondary line 4 are movable at a second conveying speed that is lower than the first conveying speed of the primary line 2.

Although figure 1 and figure 2 only show operators 6, the task of taking the poultry from the conveyor line 3 and suspend the poultry in the second carriers of the secondary line 4 can also be done by robots, or by a combination of human operators and robots. Accordingly the suspension locations are equipped with at least one of a workplace for an operator and an automatic hanging equipment, preferably in the form of robots with visual and handling capabilities.

Although it is possible that the distance between the carriers in the primary line 2 is variable, it is preferred for its simplicity that a first distance between the first carriers in the primary line 2 is constant.

On the other hand, although it is possible that the distance of the second carriers in the secondary line 4 is unitary, it is preferred that the second carriers in the secondary line 4 are at a second distance in the suspension locations and at a third distance near the transfer units 5, wherein the third distance is larger than the second distance. The distances of the carriers in the secondary line 4 can thus be attuned to the suspension operation and to the transfer operation.

It is further beneficial that the transfer units 5 are synchronized with the primary line 2 to arrange that poultry suspended in the second carriers of the at least one secondary line 4 are all individually transferred to an available empty first carrier in the primary line 2.

With reference to figure 3 a preferred embodiment is shown of the secondary conveyor line 4. Figure 3 shows that the or each secondary line 4 comprises an endless pathway 7 for the carriers 8, wherein rotation wheels 9 drive the second carriers 8 along at least a part 7' of the pathway 7, and wherein one or more predominantly straight sections 7'' of the pathway 7 are provided between the rotation wheels 9.

Figure 3 shows that the or each secondary line 4 is provided with a spindle drive 10 for driving the second carriers 8 in the straight sections 7'' between the rotation wheels 9. It also shows that the transfer units 5 are located at the at least one secondary line 4 opposite to the rotation wheels 9, which is an optimal location for executing the rehanging of the poultry from the at least one secondary line 4 to the primary line 2. In a (not shown) embodiment the rotation wheels 9 may be combined with the transfer units 5.

Figure 3 further depicts each of the second carriers 8 is provided with a protrusion 11 that extends to and cooperates with the spindle drive 10. This same protrusion or another protrusion may be applied to extend to and cooperate with the rotation wheels 9.

It is further remarked that the rotation wheels 9 drive the second carriers in the at least one secondary line 4 independent from the spindle drive 10 for the second carriers in the at least one secondary line 4.

Embodiments of the present invention can include every combination of features that are disclosed herein independently from each other. Although the invention has been discussed in the foregoing with reference to an exemplary embodiment of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

## Claims

1. Poultry hanging system (1) for feeding a primary line (2) in which the poultry is or will be suspended from first carriers that are movable at a first conveying speed, comprising a poultry feedline (3) for transferring non-suspended poultry to at least one secondary line (4) and wherein at least one transfer unit (5) is provided for transferring the poultry from the at least one secondary line (4) to the primary line (2), wherein the at least one secondary line (4) is equipped with second carriers for suspending the poultry, **characterized in that** in use the poultry feedline (3) transfers the non-suspended poultry to at least two separate suspension locations where the poultry is suspendable in the second carriers of the at least one secondary line (4), and that there are at least two transfer units (5) for transferring the poultry from the at least one secondary line (4) to the primary line (2) so as to enable and arrange that at least in the suspension locations said second carriers of the at least one secondary line (4) are movable at a second conveying speed that is lower than the first conveying speed of the primary line (2).

2. Poultry hanging system according to claim 1, **characterized in that** the suspension location is equipped with one of a workplace for an operator (6), and automatic hanging equipment.

3. Poultry hanging system according to claim 1 or 2, **characterized in that** the system is provided with two or more secondary lines (4).

4. Poultry hanging system according to any one of claims 1-3, **characterized in that** a first distance between first carriers in the primary line (2) is constant.

5. Poultry hanging system according to any one of claims 1-4, **characterized in that** the second carriers in the least one secondary line (4) are at a second distance in the suspension locations and at a third distance near the transfer units, wherein the third distance is larger than the second distance.

6. Poultry hanging system according to any one of claims 1-5, **characterized in that** the transfer units (5) are synchronized with the primary line (2) to arrange that poultry suspended in the second carriers of the at least one secondary line (4) are all individually transferred to an available empty first carrier in the primary line (2).

7. Poultry hanging system according to any one of claims 1-6, **characterized in that** the or each secondary line (4) comprises an endless pathway (7) for the second carriers, wherein rotation wheels (9) drive the second carriers (8) along at least a part (7') of the pathway (7), and wherein one or more predominantly straight sections (7") of the pathway (7) are provided between the rotation wheels (9), and that the or each secondary line (4) is provided with a spindle drive (10) for driving the second carriers (8) in the straight sections (7") between the rotation wheels (9).

8. Poultry hanging system according to claim 7, **characterized in that** the suspension location is at one or more predominantly straight sections (7") of the pathway (7).

9. Poultry hanging system according to claim 7 or 8, **characterized in that** each of the carriers (8) is provided with a protrusion (11) or protrusions that extend to and cooperate with at least one of the spindle drive (10) and the rotation wheels (9) .

10. Poultry hanging system according to any one of claims claim 7-9, **characterized in that** the rotation wheels (9) drive the second carriers in the at least one secondary line (4) independent from the spindle drive (10) for the second carriers in the at least one secondary line (4).

11. Poultry hanging system according to claim 10, **characterized in that** the transfer units are located at the at least one secondary line (4) opposite to the rotation wheels (9) .

12. Poultry conveying line comprising an endless pathway (7) for carriers (8) for suspending poultry, wherein rotation wheels (9) drive the carriers (8) along at least a part (7') of the pathway (7), and wherein one or more predominantly straight sections (7") of the pathway (7) are provided between the rotation wheels (9), **characterized in that** the poultry conveying line is provided with a spindle drive (10) for driving the carriers (8) in the straight sections (7'') between the rotation wheels (9).

13. Poultry conveying line according to claim 12, **characterized in that** each of the carriers (8) is provided with a protrusion (11) or protrusions that extend to and cooperate with at least one of the spindle drive (10) and the rotation wheels (9).

14. Poultry conveying line according to any one of claims 12-13, **characterized in that** the rotation wheels (9) drive the carriers independent from the spindle drive (10) for driving the carriers in the straight sections (7") between the rotation wheels (9).

15. Method for feeding a primary line (2) in which poultry is or will be suspended from first carriers that are movable at a first conveying speed, comprising transferring non-suspended poultry to at least one secondary line (4), and transferring the poultry from the at least one secondary line (4) to the primary line (2), **characterized by** transferring the non-suspended poultry to at least two suspension location where the poultry is suspended in second carriers of the at least one secondary line (4), wherein at least in the suspension locations said second carriers of the at least one secondary line (4) are moved at a second conveying speed that is lower than the first conveying speed of the primary line (2).
